# EUROPEAN PATENT SPECIFICATION

(11) **EP 1 349 380 B1**
(45) Date of publication and mention of the grant of the patent: **01.02.2006**
(21) Application number: 03251883.9
(22) Date of filing: 25.03.2003
(51) Int. Cl.: H04N 5/217, H04N 3/15

(54) **Column readout circuit with increased signal range for CMOS image sensor**
Spaltenausleseschaltung mit erhöhtem Bildsignalbereich für einen CMOS-Bildsensor
Circuit de lecture de colonnes à plage de signaux étendue pour un capteur d'image CMOS

(30) Priority: 27.03.2002 US 109142
(43) Date of publication of application: 01.10.2003
(73) Proprietor: OmniVision Technologies Inc., Sunnyvale, California 94085 (US)
(72) Inventor: He, Xinping c/o Omnivision Technologies, Inc., Sunnyvale,California 94085 (US); Yang, Hongli, Cupertino, California 95014 (US); Shan, Quingwei, San Jose, California 95129 (US)
(74) Representative: Hackney, Nigel John

(56) References cited:
- EP-A- 0 951 178
- US-A- 5 900 623
- US-A- 5 965 871
- US-B1- 6 222 175

## Description

The present invention relates to CMOS image sensors, and more particularly, to a readout circuit using AC coupling through a MOS capacitor.

Image sensors are used to produce an image representing an object. The image sensors include rows and columns of pixels. The pixels generate small photo signals proportional to light reflected from an object to be imaged. The photo signal is read and processed by signal processing circuitry to create an image representing the object.

Pixels belonging to the same column (also referred to as bitline) are usually connected at a common output node from where the signal is read out. Each pixel in a same bitline is individually controlled to read out at the common output node. At the output node, a column readout circuit is provided to read out and amplify the photo signal.

Typically, a pixel includes a driving device that receives an electronic signal indicative of an intensity of light detected by the image sensor and drives a current proportional to the intensity (the photo signal), to a bitline to which the pixel cell is coupled. Following signal integration, pixels of a selected row are accessed by asserting a row select signal to each pixel of the selected row.

Additionally, the column readout circuit, in some image sensors, is used to remove thermal noise, fixed pattern noise, and other types of noise. This is done by having the column readout circuit sample the output of the pixel during a reset period. The column readout circuit then subtracts the reset signal from the photo signal. This type of readout circuit is sometimes referred to as a correlated double sampling circuit. In some prior art image sensors, a second stage column readout circuit is used to further amplify the photo signal and to eliminate noise caused by the first stage column readout circuit.

In the column readout circuits, capacitors are required to sample and hold the photo signal and the reset signal. Typically, these capacitors are formed using two polysilicon layers (poly-poly capacitor) or two metal layers (metal-metal capacitor). However, the use of multiple polysilicon or two metal layers is not compatible with standard CMOS logic processes, thereby increasing the cost. Further, polysilicon or metal capacitors may occupy relatively large areas.

An example of a correlated double sampling column readout circuit is seen in U.S. Patent No.US-A-6,222,175. The circuit described therein includes capacitors C7 and C8 for holding a reset signal and a photo signal. The capacitors C7 and C8 are conventional capacitors either of the poly-poly type or of the metal-metal type. Both of these types of capacitors require additional manufacturing complexity relative to standard CMOS logic processes.

An example of an active pixel sensor implemented with CMOS technology is USA patent number US-A-5, 900,623, which discloses a penality of photocells each including a switching network coupling the photodiode photocurrent to a storage node. The transistors in the switching network operate in a forward active subthreshold region, ensuing the diode voltage is damped to a small positive voltage.

Furthermore, even if MOS capacitors are used for the capacitors C7 and C8 of the US 6,222,4175 patent, additional problems arise. For example, because MOS capacitors are PMOS type, there is an issue with power supply noise that may couple and directly interfere with the signal. If a NMOS type capacitor is used, the photo signal voltage and the reset signal voltage must be higher than the threshold voltage (V_{T}(N)) of the MOS capacitor such that the MOS capacitor operates in the triode region. As known, an n-type MOS capacitor has a threshold voltage wherein above that voltage, the capacitance of the MOS capacitor is substantially constant. See U.S. Patent No.US-A-5,962,887. Therefore, the signals on the bitline must have a magnitude that is above V_{T}(N). Oftentimes, this requirement cannot be easily met. An example of a readout circuit using MOS capacitors is seen in ''Performance Analysis of a Color CMOS Photogate Image Sensor" by Blanksby et al., IEEE Transactions on Electron Devices, Vol. 47, No. 1, January 2000. Another example of a readout circuit using MOS capacitors is USA patent number US-A-5,965,871, which discloses an active pixel sensing structure, including an away of pixel unit cells adapted to alternate between an image signal mode and a reset mode.

Therefore, what is needed is a column readout circuit that is compatible with standard CMOS logic processes.

Accordingly, in a first aspect, the present invention provides a column readout circuit according to Claim 1; and in another aspect the present invention provides a method of reading art a photo signal from a pixel according to claim 1.

The foregoing aspects and many of the attendant advantages of the invention will become more readily appreciated as the same become better understood by reference to the following detailed description, when taken in conjunction with the accompanying drawings, wherein:
Figure 1 is a schematic diagram of a readout circuit formed in accordance with the present invention.
Figures 2A-2H are timing diagrams illustrating the operation of the various switches of the readout circuit of Figure 1.
Figures 3A-3E shows the voltage levels of various nodes of the readout circuit of Figure 1 during operation of the readout circuit.

In the following description, numerous specific details are provided, such as the identification of various system components, to provide a thorough understanding of embodiments of the invention. One skilled in the art will recognize, however, that the invention can be practiced without one or more of the specific details, or with other methods, components, materials, etc. In still other instances, well-known structures, materials, or operations are not shown or described in detail to avoid obscuring aspects of various embodiments of the invention.

Reference throughout this specification to "one embodiment" or "an embodiment'' means that a particular feature, structure, or characteristic described in connection with the embodiment is included in at least one embodiment of the present invention. Thus, the appearance of the phrases "in one embodiment" or "in an embodiment" in various places throughout this specification are not necessarily all referring to the same embodiment. Furthermore, the particular features, structures, or characteristics may be combined in any suitable manner in one or more embodiments within the definition of the invention, which is set out in the claims.

As noted above, a CMOS image sensor includes an array of pixels formed into columns and rows. Typically, each column of pixels has associated therewith a readout circuit, which is the subject of the present invention. In the description below, a single pixel is described in connection with a readout circuit. It can be appreciated that multiple readout circuits would be required for the full image sensor.

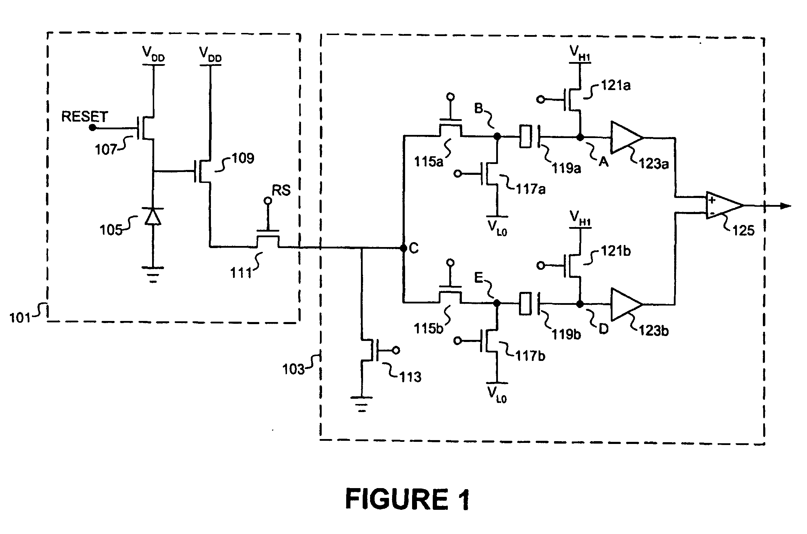

Turning to Figure 1, an active pixel 101 is shown connected to a readout circuit 103. The active pixel 101 includes a photodiode 105, a reset transistor 147, pixel output transistor 109, and row select transistor III. The configuration of the active pixel 101 is conventional in the prior art. In operation, the photodiode 105 provides a light signal output that is indicative of the amount of light impinging on the photodiode 105. The light signal is used to modulate the pixel output transistor 109 in order to output a photo signal if the row select (RS) transistor III is turned on. The pixel output transistor 109 is also referred to as being in " source follower " configuration. The reset transistor 107 is used to reset the pixel 101 for the next signal integration period. Moreover, white the pixel 101 in one embodiment uses a photodiode 105, the pixel 101 may use a photogate or a pinned photodiode.

The readout circuit 103 includes two branches: a first branch for capturing a reset signal and a second branch for capturing the photo signal. Specifically, the source of the pixel output transistor is connected, through row select transistor 111, to both the first and second branches. The use of the two branches allows for correlated double sampling, a technique useful for minimizing 1/f noise and fixed pattern noise. Note that for correlated double sampling, typically a shorting transistor is used between the two branches. However, for clarity purposes, the shorting transistor is omitted from the readout circuit shown in Figure 1.

The first and second branches are essentially structured the same. For ease of understanding, like elements are designated with like numerals, except that the first branch for capturing the reset signal is designated with an "a" and the second branch for capturing the photo signal is designated with a "b".

The readout circuit 103 includes a load transistor 113 of the pixel output transistor 109. The first and second branches each include branch select transistors 115a and 115b. These act as switches to select the branch to which the signal output by the active pixel 101 is directed. Downstream of the branch select transistors 115a and 115b are low voltage reference transistors 117a and 117b. The term downstream refers to locations in the signal path subsequent to a reference location. The drain of the low voltage reference transistors 117a and 117b are connected to the source/drain plate of MOS capacitors 119a and 119b. The source of the low voltage reference transistors 117a and 117b are connected to a voltage V_{lo,} which may be V_{SS} or ground. Thus, the low voltage reference transistors 117a and 117b are used to periodically and selectively pull the source/drain plate to a low reference voltage.

The MOS capacitors 119a and 119b are conventional in the an, such as that described in U.S. Patent No. US-A-5,962,887 and the references cited therein. As detailed therein, the source/drain plate of such a MOS capacitor is formed by the channel, source and drain regions of a MOSFET.

The poly gate portion of the MOS capacitors 119a and 119b is connected to the source of high voltage reference transistors 121a and 121b. The drain of the high voltage reference transistors 121a and 121b is connected to a voltage Vₕᵢ, which may be V_{DD}. Thus, the high voltage reference transistors 121a and 121b are used to periodically and selectively pull the poly gate of the MOS capacitors 119a and 119b to a high reference voltage.

The poly gate of the MOS capacitors 119a and 119b are also connected to the input of buffers 123a and 123b. The output of the buffers is then provided to the differential amplifier 125, which amplifies the difference in the reset signal and the photo signal.

The operation of the circuit is next described. It should be noted that the readout circuit operates on two input signals: the photo signal and the reset signal. Thus, the following reading technique is repeated for both the photo signal and the reset signal. The process is identical for each, so only the process for reading the photo signal is described.

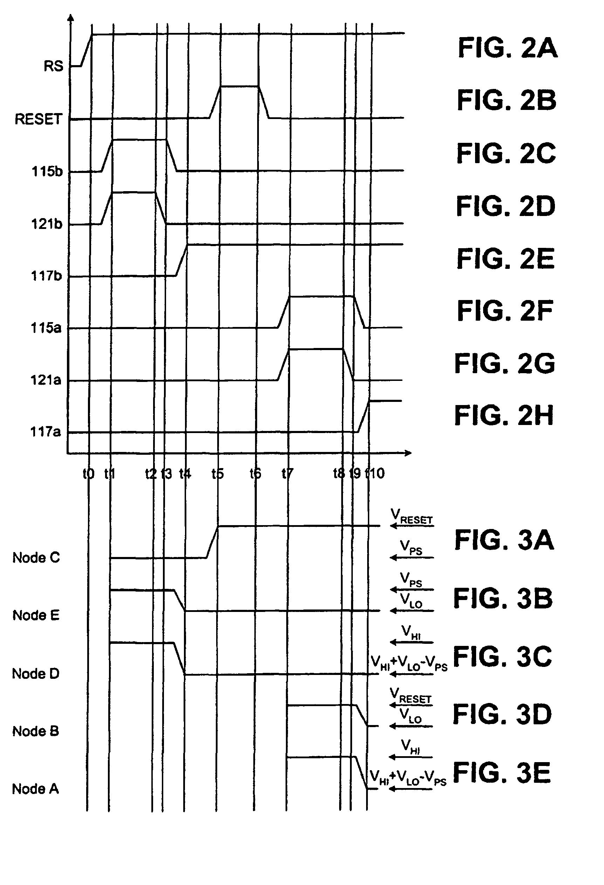

First, as seen in Figure 2A, at a time t0, the row select transistor 111 is turned on to allow the signal output by the pixel 101 to be transferred to a node C. Next, at a time t1, as seen in Figure 2B, the branch select transistor 115b and the high voltage reference transistor 121b is switched on. The low voltage reference transistor 117b is switched off. As seen in Figure 3C, the voltage at node D becomes Vₕᵢ, while the voltage at nodes E and C (as seen in Figures 3B and 3A) will be at the photo signal level (Vₚₛ).

Next, at times t2 and t3, as seen in Figures 2D and 2C, the high voltage reference transistor 121b and the branch select transistor 115b are turned off sequentially. This causes the photo signal Vₚₛ to be stored at node E. Note that node D remains at the high voltage reference Vₕᵢ. These first two steps cause the photo signal to be captured on the source/drain plate of the MOS capacitor 119b, while the poly plate has a voltage V_{hi.}

Next, at time t4, the high voltage reference transistor 121b and the branch select transistor 115b remain off. However, at time t4, as seen in Figure 2E, the low voltage reference transistor 117b is turned on. This causes the photo signal voltage Vₚₛ at node E to be "transferred" to node D of the MOS capacitor 119b through AC capacitive coupling. In particular, the signal transferred is not precisely Vₚₛ, but rather a voltage shifted version that is Vₕᵢ + Vₗₒ - Vₚₛ. If the magnitudes of Vₕᵢ and Vₗₒ are correctly selected, this technique results in the capacitors 119a and 119b always operating in the triode region. Specifically, if Vₗₒ is ground, then the difference between Vₕᵢ and Vₚₛ (maximum value) should be above the threshold voltage of the MOS capacitor 119 in order to maintain operation in the triode region.

In turn, the voltage shifted version of the photo signal voltage Vₚₛ at node D is provided through buffer 123b to differential amplifier 125. Finally, as seen in Figure 2B, the reset transistor 107 is turned on for some time period (t5 through t6) that will allow the pixel to reset.

A similar process is performed on the reset signal branch in order to process the reset signal. Thus, at time t7, the high voltage reference transistor 121a and the select transistor 115a are turned on. This allows the reset signal to be placed onto nodes C and B, while node A becomes Vₕᵢ. At times t8 and t9, as seen in Figures 2F and 2G, the high voltage reference transistor 121a and the branch select transistor 115a are turned off sequentially. This causes the reset signal to be stored at node B. Note that node A remains at the high voltage reference Vₕᵢ. These steps cause the reset signal to be captured on the source/drain plate of the MOS capacitor 119a, while the poly plate has a voltage Vₕᵢ.

Next, at time t10, the high voltage reference transistor 121a and the branch select transistor 115a remain off. However, at time t10, as seen in Figure 2H, the low voltage reference transistor 117a is turned on. This causes the reset signal at node B to be "transferred" to node A of the MOS capacitor 119a through AC capacitive coupling. In particular, the transferred signal is not precisely the reset signal, but rather a voltage shifted version that is Vₕᵢ + Vₗₒ - Vᵣₑₛₑₜ. In turn, the voltage shifted version of the reset signal at node A is provided through buffer 123a to differential amplifier 125.

As noted above, while the voltage values Vₕᵢ and Vₗₒ are generally arbitrary, in some embodiments, Vₕᵢ is simply V_{DD} and Vₗₒ is simply V_{SS} or ground. Still alternatively, the capacitors 119a and 119b may be PMOS based. In such a situation, the gate of the PMOS capacitor should be connected to the bitline.

The buffers 123a and 123b may be, for example, a transistor in source follower configuration, If Vₕᵢ is set at V_{DD}, the signal range of the source follower is increased. Alternatively, if the buffers 123a and 123b are operational amplifiers, the voltage levels of Vₕᵢ and Vₗₒ may be adjusted to meet the operational amplifiers' input common mode range, to allow for flexible adjustability.

After the reset signal and the photo signal are buffered by the buffers 123a and 123b, the signals are provided to differential amplifier 125, where the reset signal is subtracted from the photo signal, and the result is amplified to provide the output of the column readout circuit 103.

While the preferred embodiment of the invention has been illustrated and described, it will be appreciated that various changed can be made therein without departing from the scope of the invention. For example, while the present invention has been described in terms of using a photodiode, other types of photosensitive or light sensing elements may also be used, such as a photogate, pinned photodiode, and the like. Further, the above examples are described using a p-type substrate and photodiode. For an n-type substrate or a photogate sensor, the present invention is equally applicable to one of ordinary skill.

## Claims

1. A column readout circuit (103) for reading out a photo signal and a reset signal provided by a pixel (101), the circuit comprising:
a reset signal branch including a first MOS capacitor (119a) having a first terminal and a second terminal, said second terminal selectively connected to a high voltage reference through a first switch (121a) that can be periodically turned on and off during normal operation, said first terminal selectively connected to said pixel and a low voltage reference through a second switch (117a) that can be periodically turned on and off during normal operation; and
a photo signal branch including a second MOS capacitor (119b) having a first terminal and a second terminal, said second terminal selectively connected to said high voltage reference through a third switch (121b) that can be periodically turned on and off during normal operation, said first terminal selectively connected to said pixel and said low voltage reference through a fourth switch (117b) that can be periodically turned on and off during normal operation; **characterized in that**
said switches can be periodically turned on and off independently, during normal operation.

2. The readout circuit of Claim 1 further wherein said first and second MOS capacitors (119a, b) are operating in the triode region.

3. The readout circuit of Claim 1 wherein said pixel (101) includes a photosensitive element (105) selected from the group of photodiode, photogate, or pinned photodiode.

4. The readout circuit of Claim 1 further including a differential amplifier (125) for receiving as inputs a first signal from said second terminal of said first MOS capacitor (119a) and a second signal from said second terminal of said second MOS capacitor (119b).

5. The readout circuit of Claim 4 further including buffers (123a, b) disposed between said first and second MOS capacitors (119a, b) and said differential amplifier (125).

6. The readout circuit of Claim 1 wherein the difference between the high voltage reference and a maximum value of the photo signal or the reset signal is greater than a threshold voltage of said first or second MOS capacitor (119a, b).

7. A method of reading out a photo signal from a pixel (101) comprising:
coupling a reset signal onto a first terminal of a first MOS capacitor (119a);
placing a high voltage reference onto a second terminal of said first MOS capacitor (119a), through a first switch (121a) that can be periodically turned on and off during normal operation;
coupling said first terminal of said first MOS capacitor (119a) to a low voltage reference through a second switch (117a) that can be periodically turned on and off during normal operation, such that said reset signal is transferred through said first MOS capacitor (119a) by capacitive coupling to said second terminal of said first MOS capacitor;
reading said reset signal from said second terminal of said first MOS capacitor (119a).
coupling said photo signal onto a first terminal of a second MOS capacitor (119b);
placing said voltage reference onto a second terminal of said second MOS capacitor (119b), through a third switch (121b) that can be periodically turned on and off during normal operation;
coupling said first terminal of said second MOS capacitor (119b) to said low voltage reference through a fourth switch (117b) that can be periodically turned on and off during normal operation such that said photo signal is transferred through said second MOS capacitor (119b) by capacitive coupling to said second terminal of said second MOS capacitor (119b) ; and
reading said photo signal from said second terminal of said second MOS capacitor (119b); wherein
said switches are periodically turned on and off independently, during the execution of the above steps.

8. The method of Claim 7 wherein said second MOS capacitor (119b) is operating in the triode region.

9. The method of Claim 7 wherein said photo signal on said second terminal of said second MOS capacitor (119b) is provided to one input of a differential amplifier (125).

10. The method of Claim 9 wherein said photo signal on said second terminal of said second MOS capacitor (119b) is provided to said differential amplifier (125) through a buffer (123b).

11. The method of Claim 7 wherein the difference between the high voltage reference and a maximum value of the photo signal is greater than a threshold voltage of said second MOS capacitor (119b).

12. The method of Claim 7 wherein said first MOS capacitor (119a) is operating in the triode region.

13. The method of Claim 7 wherein said reset signal on said second terminal of said first MOS capacitor (119a) is provided to an input of a differential amplifier (125).

14. The method of Claim 13 wherein said reset signal on said second terminal of said first MOS capacitor is provided to said differential amplifier (125) through a buffer (123a).

15. The method of Claim 7 wherein the difference between the high voltage reference and a maximum value of the reset signal is greater than a threshold voltage of said first MOS capacitor (119a).

## Patentansprüche

1. Spaltenausleseschaltung (103) zum Auslesen eines Photosignals und eines Rücksetzsignals, die von einem Pixel (101) bereitgestellt sind, wobei die Schaltung Folgendes umfasst:
einen Rücksetzsignalzweig, der einen ersten MOS-Kondensator (119a) mit einem ersten Anschluss und einem zweiten Anschluss umfasst, wobei der zweite Anschluss über einen ersten Schalter (121a), der während des Normalbetriebs periodisch ein- und ausschaltbar ist, selektiv mit einer Hochspannungsreferenz verbunden ist, und der erste Anschluss über einen zweiten Schalter (117a), der während des Normalbetriebs periodisch ein- und ausschaltbar ist, selektiv mit dem Pixel und mit einer Niederspannungsreferenz verbunden ist; und
einen Pixelsignalzweig, der einen zweiten MOS-Kondensator (119b) mit einem ersten Anschluss und einem zweiten Anschluss umfasst, wobei der zweite Anschluss über einen dritten Schalter (121b), der während des Normalbetriebs periodisch ein- und ausschaltbar ist, selektiv mit der Hochspannungsreferenz verbunden ist, und der erste Anschluss über einen vierten Schalter (117b), der während des Normalbetriebs periodisch ein- und ausschaltbar ist, selektiv mit dem Pixel und mit der Niederspannungsreferenz verbunden ist;
**dadurch gekennzeichnet, dass** die Schalter während des Normalbetriebs unabhängig voneinander periodisch ein- und ausschaltbar ist.

2. Ausleseschaltung nach Anspruch 1, worin der erste und der zweite MOS-Kondensator (119a, b) im Triodenbereich arbeiten.

3. Ausleseschaltung nach Anspruch 1, worin das Pixel (101) ein lichtempfindliches Element (105) umfasst, das aus der aus Photodiode, Photogate oder Pinned-Photodiode bestehenden Gruppe ausgewählt ist.

4. Ausleseschaltung nach Anspruch 1, weiters umfassend einen Differenzverstärker (125), um ein erstes Signal aus dem zweiten Anschluss des ersten MOS-Kondensators (119a) und ein zweites Signal aus dem zweiten Anschluss des zweiten MOS-Kondensators (119b) als Eingangssignale zu empfangen.

5. Ausleseschaltung nach Anspruch 4, weiters umfassend Puffer (123a, b), die zwischen dem ersten und zweiten MOS-Kondensator (119a, b) und dem Differenzverstärker (125) angeordnet sind.

6. Ausleseschaltung nach Anspruch 1, worin die Differenz zwischen der Hochspannungsreferenz und einem Höchstwert des Photosignals oder des Rücksetzsignals größer als eine Schwellenspannung des ersten oder zweiten MOS-Kondensators (119a, b) ist.

7. Verfahren zum Auslesen eines Photosignals aus einem Pixel (10), umfassend:
das Koppeln eines Rücksetzsignals an einen ersten Anschluss eines ersten MOS-Kondensators (119a);
das Anlegen einer Hochspannungsreferenz an einen zweiten Anschluss des ersten MOS-Kondensators (119a) über einen ersten Schalter (121a), der während des Normalbetriebs periodisch ein- und ausschaltbar ist;
das Koppeln des ersten Anschlusses eines ersten MOS-Kondensators (119a) an eine Niederspannungsreferenz über einen zweiten Schalter (117a), der während des Normalbetriebs periodisch ein- und ausschaltbar ist, sodass das Rücksetzsignal durch den ersten MOS-Kondensator (119a) durch eine kapazitive Kopplung an den zweiten Anschluss des ersten MOS-Kondensators übertragen wird;
das Lesen des Rücksetzsignals aus dem zweiten Anschluss des ersten MOS-Kondensators (119a);
das Koppeln des Photosignals an einen ersten Anschluss eines zweiten MOS-Kondensators (119b);
das Anlegen der vorgenannten Spannungsreferenz an einen zweiten Anschluss des zweiten MOS-Kondensators (119b) über einen dritten Schalter (121b), der während des Normalbetriebs periodisch ein- und ausschaltbar ist;
das Koppeln des ersten Anschlusses des zweiten MOS-Kondensators (119b) an die vorgenannte Spannungsreferenz über einen vierten Schalter (117b), der während des Normalbetriebs periodisch ein- und ausschaltbar ist, sodass das Photosignal durch den zweiten MOS-Kondensator (119b) durch eine kapazitive Kopplung an den zweiten Anschluss des zweiten MOS-Kondensators (119b) übertragen wird; und
das Lesen des Photosignals aus dem zweiten Anschluss des zweiten MOS-Kondensators (119b); worin
die Schalter bei der Ausführung der obigen Schritte unabhängig voneinander periodisch ein- und ausschaltbar ist.

8. Verfahren nach Anspruch 7, worin der zweite MOS-Kondensator (119b) im Triodenbereich arbeitet.

9. Verfahren nach Anspruch 7, worin das Photosignal am zweiten Anschluss des zweiten MOS-Kondensators (119b) an einem Eingang eines Differenzverstärkers (125) bereitgestellt wird.

10. Verfahren nach Anspruch 9, worin das Photosignal am zweiten Anschluss des zweiten MOS-Kondensators (119b) dem Differenzverstärker (125) über einen Puffer (123b) bereitgestellt wird.

11. Verfahren nach Anspruch 7, worin die Differenz zwischen der Hochspannungsreferenz und einem Höchstwert des Photosignals größer als eine Schwellenspannung des zweiten MOS-Kondensators (119b) ist.

12. Verfahren nach Anspruch 7, worin der erste MOS-Kondensator (119a) im Triodenbereich arbeitet.

13. Verfahren nach Anspruch 7, worin das Rücksetzsignal am zweiten Anschluss des ersten MOS-Kondensators (119a) an einem Eingang eines Differenzverstärkers (125) bereitgestellt wird.

14. Verfahren nach Anspruch 13, worin das Rücksetzsignal am zweiten Anschluss des ersten MOS-Kondensators dem Differenzverstärker (125) über einen Puffer (123a) bereitgestellt wird.

15. Verfahren nach Anspruch 7, worin die Differenz zwischen der Hochspannungsreferenz und einem Höchstwert des Rücksetzsignals größer als eine Schwellenspannung des ersten MOS-Kondensators (119a) ist.

## Revendications

1. Un circuit de lecture de colonnes (103) pour lire un signal photo et un signal de remise à zéro fourni par un pixel (101), le circuit comprenant:
une dérivation de signal de remise à zéro comprenant un premier condensateur MOS (119a) ayant une première borne et une seconde borne, ladite seconde borne étant reliée de manière sélective à une référence haute tension par l'intermédiaire d'un premier commutateur (121a) qui peut être périodiquement mis aux états passant et non passant pendant un fonctionnement normal, ladite première borne étant reliée de manière sélective audit pixel et à une référence basse tension par l'intermédiaire d'un second commutateur (117a) qui peut être périodiquement mis aux états passant et non passant pendant un fonctionnement normal; et
une dérivation de signal photo comprenant un second condensateur MOS (119b) ayant une première borne et une seconde borne, ladite première borne étant reliée de manière sélective à ladite référence haute tension par l'intermédiaire d'un troisième commutateur (121b) qui peut être périodiquement mis aux états passant et non passant pendant un fonctionnement normal, ladite première borne étant reliée de manière sélective audit pixel et à ladite référence basse tension par l'intermédiaire d'un quatrième commutateur (117b) qui peut être périodiquement mis aux états passant et non passant pendant un fonctionnement normal; **caractérisé en ce que**
lesdits commutateurs peuvent être périodiquement mis aux états passant et non passant de manière indépendante, pendant un fonctionnement normal.

2. Le circuit de lecture de la Revendication 1 dans lequel, en outre, lesdits premier et second condensateurs MOS (119a, b) fonctionnent dans le domaine triode.

3. Le circuit de lecture de la Revendication 1 dans lequel ledit pixel (101) comprend un élément photosensible (105) sélectionné dans le groupe d'une photodiode, d'une photoporte, ou d'une photodiode à broches.

4. Le circuit de lecture de la Revendication 1 comprenant en outre un amplificateur différentiel (125) pour recevoir en tant qu'entrées un premier signal issu de ladite seconde borne dudit premier condensateur MOS (119a) et un second signal issu de ladite seconde borne dudit second condensateur MOS (119b).

5. Le circuit de lecture de la Revendication 4 comprenant en outre des tampons (123a, b) disposés entre lesdits premier et second condensateurs MOS (119a, b) et ledit amplificateur différentiel (125).

6. Le circuit de lecture de la Revendication 1 dans lequel la différence entre la référence haute tension et une valeur maximum du signal photo ou du signal de remise à zéro est supérieure à une tension de seuil dudit premier ou second condensateur MOS (119a, b).

7. Un procédé de lecture d'un signal photo issu d'un pixel (101) comprenant les étapes consistant à:
coupler un signal de remise à zéro sur une première borne d'un premier condensateur MOS (119a);
placer une référence haute tension sur une seconde borne dudit premier condensateur MOS (119a), par l'intermédiaire d'un premier commutateur (121a) qui peut être périodiquement mis aux états passant et non passant pendant un fonctionnement normal;
coupler ladite première borne dudit premier condensateur MOS (199a) sur une référence basse tension par l'intermédiaire d'un second commutateur (117a) qui peut être périodiquement mis aux états passant et non passant pendant un fonctionnement normal, de telle manière que ledit signal de remise à zéro est transféré à travers ledit premier condensateur MOS (119a) par couplage capacitif sur ladite seconde borne dudit premier condensateur MOS;
lire ledit signal de remise à zéro issu de ladite seconde borne dudit premier condensateur MOS (119a);
coupler ledit signal photo sur une première borne d'un second condensateur MOS (119b);
placer ladite référence de tension sur une seconde borne dudit second condensateur MOS (119b), par l'intermédiaire d'un troisième commutateur (121b) qui peut être périodiquement mis aux états passant et non passant pendant un fonctionnement normal;
coupler ladite première borne dudit second condensateur MOS (119b) à ladite référence basse tension par l'intermédiaire d'un quatrième commutateur (117b) qui peut être périodiquement mis aux états passant et non passant pendant un fonctionnement normal de telle manière que ledit signal photo est transféré à travers ledit second condensateur MOS (119b) par couplage capacitif à ladite seconde borne dudit second condensateur MOS (119b); et
lire ledit signal photo issu de ladite seconde borne dudit second condensateur MOS (119b); où
lesdits commutateurs sont périodiquement mis aux états passant et non passant de manière indépendante, pendant l'exécution des étapes ci-dessus.

8. Le procédé de la Revendication 7 dans lequel ledit second condensateur MOS (119b) fonctionne dans le domaine triode.

9. Le procédé de la Revendication 7 dans lequel ledit signal photo sur ladite seconde borne dudit second condensateur MOS (119b) est fourni à une entrée d'un amplificateur différentiel (125).

10. Le procédé de la Revendication 9 dans lequel ledit signal photo sur ladite seconde borne dudit second condensateur MOS (119b) est fourni audit amplificateur différentiel (125) par l'intermédiaire d'un tampon (123b).

11. Le procédé de la Revendication 7 dans lequel la différence entre la référence haute tension et une valeur maximum du signal photo est supérieure à une tension de seuil dudit second condensateur MOS (119b).

12. Le procédé de la Revendication 7 dans lequel ledit premier condensateur MOS (119a) fonctionne dans le domaine triode.

13. Le procédé de la Revendication 7 dans lequel ledit signal de remise à zéro sur ladite seconde borne dudit premier condensateur MOS (119a) est fourni à une entrée d'un amplificateur différentiel (125).

14. Le procédé de la Revendication 13 dans lequel ledit signal de remise à zéro sur ladite seconde borne dudit premier condensateur MOS est fourni audit amplificateur différentiel (125) par l'intermédiaire d'un tampon (123a).

15. Le procédé de la Revendication 7 dans lequel la différence entre la référence haute tension et une valeur maximum du signal de remise à zéro est supérieure à une tension de seuil dudit premier condensateur MOS (119a).
